# EUROPÄISCHE PATENTSCHRIFT

(11) **EP 3 135 396 B1**
(45) Veröffentlichungstag und Bekanntmachung des Hinweises auf die Patenterteilung: **07.04.2021**
(21) Anmeldenummer: 16185247.0
(22) Anmeldetag: 23.08.2016
(51) Int. Cl.: B21F 39/00, B60B 1/02, B21J 7/14, B60B 1/00

(54) **VERFAHREN ZUR HERSTELLUNG VON SPEICHEN**
METHOD FOR PRODUCING SPOKES
PROCEDE DE FABRICATION DE RAYONS

(30) Priorität: 25.08.2015 DE 102015114053
(43) Veröffentlichungstag der Anmeldung: 01.03.2017
(73) Patentinhaber: DT Swiss AG, 2504 Biel (CH)
(72) Erfinder: Lafuente, Alberto, CH-2552 Orpund (CH); Barandun, Benedikt, CH-6535 Roveredo (CH); Scheidegger, Adrian, CH-3065 Bolligen (CH)
(74) Vertreter: BSB Patentanwälte Schütte & Engelen Partnerschaft mbB

(56) Entgegenhaltungen:
- CN-Y- 2 136 704
- DE-C- 76 604
- DE-C- 102 486
- DE-C- 466 866
- FR-A1- 2 375 928
- MUELLER F: "THE FORMING OF WIRE TO NEAR-NET-SHAPE. Ö...OPTIONS FOR NEAR-NET-SHAPE FORMING OF WIRE EXAMINED", WIRE INDUSTRY, MAGNUM PUBLICATIONS LTD. OXTED, GB, Bd. 61, Nr. 10, 1. Oktober 1994 (1994-10-01), Seiten 689-692, XP000469552, ISSN: 0043-6011

## Beschreibung

Die vorliegende Erfindung betrifft ein Verfahren zur Herstellung von Speichen aus einem Drahtwerkstoff gemäß dem Oberbegriff des Anspruchs 1 (siehe z.B. DE 76 604 C) . Die Speichen weisen jeweils wenigstens einen Speichenschaft mit wenigstens zwei Schaftabschnitten auf. Die Schaftabschnitte unterscheiden sich wenigstens in einem Querschnitt. Zur Ausbildung der Querschnitte wird der Drahtwerkstoff wenigstens abschnittsweise mit wenigstens einem Formwerkzeug umgeformt.

Belastbare und zuverlässige Speichen sind ein wesentliches Merkmal qualitativ hochwertiger Laufräder für Zweiräder. Neben Speichen aus Speichendraht werden einige Speichen auch aus nichtmetallischen Werkstoffen gefertigt, wie z. B. faserverstärkten Kunststoffen. Allerdings haben metallische Drahtspeichen noch immer viele Vorteile gegenüber Speichen aus anderen Materialien und bieten daher gute Möglichkeiten für den Bau von leichten und dauerhaft haltbaren Laufrädern gerade auch im Bereich der Sporträder.

Bei Metallspeichen ist die Reduzierung des Speichendrahtes auf unterschiedliche Durchmesser ein besonders wichtiger Schritt, da so erhebliches Gewicht eingespart werden kann. Dabei sind das eingesetzte Verfahren bzw. die verwendeten Maschinen von großer Bedeutung, da dadurch die Haltbarkeit und die Stabilität der Speichen stark beeinflusst werden. So ist z. B. das Ziehen des Speichendrahtes, wie von der DE 466 866 beschrieben, eher nachteilig für das Werkstoffgefüge und somit die Belastbarkeit. Als besonders vorteilhaft haben sich Reduziermaschinen erwiesen, welche durch Hämmern den Durchmesser reduzieren. Dadurch wird die Zähigkeit des Drahtwerkstoffes verbessert und die Belastbarkeit der Speiche verstärkt.

Die im Stand der Technik bekannten Maschinen ermöglichen an sich eine zuverlässige Produktion von Speichen, bei der die gewünschten unterschiedlichen Dicken ausreichend genau eingestellt werden können. Für unterschiedliche Radtypen und Einspeichungsarten müssen aber unterschiedlichste Speichentypen mit unterschiedlichen Dickenabschnitten und unterschiedlich langen Übergangsabschnitten zwischen den verschiedenen Dickenabschnitten hergestellt werden. Dabei werden mit den bekannten Herstellmaschinen und Herstellverfahren nur relativ grobe Toleranzbereiche erreicht, sodass ein Übergangsabschnitt bei unterschiedlichen und insbesondere sogar auch bei gleichen Speichentypen mal kürzer und mal länger ausfallen kann. Diese Toleranzen wirken sich an sich nicht auf die technische Qualität der Speichen aus, bewirken aber wenigstens optische Unterschiede, die nicht gewünscht sind. Um solche Unterschiede bei einem fertigen Laufrad zu verhindern, ist es möglich, die zu verbauenden Speichen vorher zu selektieren oder entsprechend zu klassifizieren. Dadurch entsteht aber ein erheblich höherer Aufwand und ein größerer Ausschuss.

Es ist daher die Aufgabe der vorliegenden Erfindung, eine verbesserte Herstellung von Speichen, insbesondere mit höherer Präzision und engeren Toleranzen, und eine damit hergestellte Speiche zur Verfügung zu stellen.

Diese Aufgabe wird gelöst durch ein Verfahren zur Herstellung von Speichen mit den Merkmalen des Anspruchs 1. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Verfahren dient zur Herstellung von Speichen aus einem Drahtwerkstoff. Die Speichen weisen jeweils wenigstens einen Speichenschaft mit wenigstens zwei Schaftabschnitten auf. Die Schaftabschnitte unterscheiden sich wenigstens in einem Querschnitt. Zur Ausbildung der Querschnitte wird der Drahtwerkstoff wenigstens abschnittsweise mit wenigstens einem Formwerkzeug umgeformt. Insbesondere wird der Drahtwerkstoff in wenigstens einem Bearbeitungsabschnitt umgeformt. Die Relativposition des Drahtwerkstoffes in Bezug zu dem Formwerkzeug wird während des Umformens in axialer Richtung mit wenigstens einer Zuführeinrichtung verändert. Dabei wird zur Formgebung der Querschnitte in den wenigstens zwei Schaftabschnitten die Relativposition des Drahtwerkstoffes in Bezug zu dem Formwerkzeug mit unterschiedlichen der Zuführeinrichtung Positionierbewegungen verändert. Zur Ausbildung der Querschnitte wird der Drahtwerkstoff wenigstens abschnittsweise mit dem Formwerkzeug schlagend oder durch Prägen umgeformt und/oder reduziert. Wobei insbesondere das Formwerkzeug aus wenigstens zwei gegenüberliegenden Werkzeugeinheiten besteht. Wobei die Werkzeugeinheiten insbesondere synchronisiert auf den Drahtwerkstoff einwirken.

Das erfindungsgemäße Verfahren hat viele Vorteile. Ein erheblicher Vorteil ist, dass die Relativposition des Drahtwerkstoffes mit unterschiedlichen Positionierbewegungen verändert wird. Dadurch kann die Maßhaltigkeit der hergestellten Speichen erheblich verbessert werden. Es können wesentlich engere Toleranzen verwirklicht werden. Besonders bei Speichen mit unterschiedlichen ausgeformten Querschnitten kann an den Übergangsbereichen, den sogenannten Ausläufen, eine höhere Präzision erreicht werden. Dadurch wird eine Selektion der für ein Laufrad zu verbauenden Speichen in der Regel nicht mehr nötig, da die Toleranzen in der normalen Produktion ausreichend gering sind, um z. B. optische Unterschiede auszuschließen.

Die mit dem Verfahren hergestellten Speichen sind insbesondere für wenigstens teilweise muskelkraftbetriebene Zweiräder und bevorzugt für muskelkraftbetriebene Fahrräder geeignet. Die Speichen sind auch für Fahrräder, welche die Muskelkraft motorisch unterstützen, wie zum Beispiel Pedelecs. Die Speichen können auch für reine Elektrofahrräder vorgesehen sein. Möglich ist auch, dass die Speichen für Dreiräder und/oder vierrädrige Fahrzeuge oder auch Motorräder vorgesehen sind. Die Speichen sind insbesondere für eine (wenigstens teilweise) tangentiale und (wenigstens teilweise) radiale Einspeichung geeignet.

Die fertigen Speichen können z. B. als Rundspeichen und/oder als Flachspeichen ausgebildet sein. Möglich sind auch andere Formen, wie z. B. Messer-, Säbel-, Aerospeichen. Um unrunde Querschnitte bei der fertigen Speiche herzustellen, werden ein oder mehrere Abschnitte des Speichenschaftes vorzugsweise nach einer Durchmesserreduzierung umgeformt und insbesondere geprägt. Durch die Erfindung wird die Maßhaltigkeit verbessert. Die Speichen werden reproduzierbarer und insbesondere in den Übergangsbereichen zwischen unterschiedlichen Schaftabschnitten kann die Toleranz der Maße verbessert werden. Die Übergangsbereiche werden genauer gefertigt und sehen optisch besser aus. Das ist insbesondere für die Herstellung von Flachspeichen oder sonstigen Speichen mit unrunden Abschnitten vorteilhaft. Wird in einem Speichenabschnitt der Durchmesser von 2,0 mm auf 1,5 mm reduziert und dort anschließend die Speiche geprägt, so wird der Übergangsbereich von dünn zu dick und flach zu rund reproduzierbarer.

Die Speichenschäfte sind insbesondere als Eindickend-, Doppeldickend- und/oder 3D-Speichen ausgebildet. Der Drahtwerkstoff ist insbesondere ein Speichendraht und vorzugsweise ein metallischer oder aus einem Metalldraht bestehender Speichendraht. Im Rahmen der vorliegenden Erfindung kann der Begriff Drahtwerkstoff vorzugsweise durch den Begriff Speichendraht ersetzt werden. Als Werkstoff werden geeignete Metallwerkstoffe eingesetzt, wie z. B. Stahl, Aluminium, Titan, Magnesium und/oder Kompositwerkstoffe.

Es ist möglich, dass zur Formgebung eines Querschnitts für wenigstens einen ersten Schaftabschnitt die Relativposition des Drahtwerkstoffes in Bezug zu dem Formwerkzeug mit wenigstens einer ersten Positionierbewegung verändert wird und dass zur Formgebung eines Querschnitts für wenigstens einen zweiten Schaftabschnitt die Relativposition des Drahtwerkstoffes in Bezug zu dem Formwerkzeug mit wenigstens einer zweiten Positionierbewegung verändert wird und dass sich die erste Positionierbewegung von der zweiten Positionierbewegung unterscheidet.

Besonders bevorzugt ist, dass die Relativposition mit einer Positionierbewegung verändert wird, welche einen gleichmäßigen und homogenen umformenden Verlauf entlang der Längsrichtung des Drahtwerkstoffes gewährleisten. Bevorzugt erfolgt die Positionierbewegung durch ein Bewegen des Drahtwerkstoffes. Beispielsweise wird der Draht geschoben und/oder insbesondere gezogen.

In einer besonders bevorzugten Weiterbildung unterscheiden sich die Positionierbewegungen in ihrer effektiven Geschwindigkeit. Dabei entspricht die effektive Geschwindigkeit einer Dauer der Formgebung des Abschnitts mit dem entsprechenden Querschnitt bezogen auf die Länge des Abschnitts mit dem entsprechenden Querschnitt. Insbesondere berücksichtigt die effektive Geschwindigkeit nicht nur die Geschwindigkeiten der tatsächlichen Bewegungen, sondern auch Pausen bzw. einen Stillstand während der Umformung. Die Positionierbewegungen unterscheiden sich insbesondere signifikant. Beispielsweise unterscheiden sich die effektiven Geschwindigkeiten um mindestens 5 % oder 10 % oder mehr. Möglich ist auch ein kleinerer oder noch größerer Unterschied. Eine Anpassung von Geschwindigkeiten während der Bearbeitung bzw. Umformung wirkt sich besonders vorteilhaft auf die Maßhaltigkeit und damit auf das optische Erscheinungsbild aus. Die Geschwindigkeit kann stufenweise oder auch kontinuierlich verändert werden.

Die Positionierbewegungen können sich in ihrer maximalen und/oder minimalen Geschwindigkeit unterscheiden. Dabei ist es möglich, dass die Positionierbewegungen eine identische effektive Geschwindigkeit aufweisen. Beispielsweise erfolgt eine der Positionierbewegungen mit wenigstens einer Pause oder mit mehreren Pausen, welche durch höhere maximale Geschwindigkeiten kompensiert werden. Es ist möglich, dass die Geschwindigkeit konstant gehalten wird. Möglich ist aber auch, dass die Geschwindigkeit veränderlich ist, beispielsweise über die Zeit zunimmt und/oder abnimmt. Solche Ausgestaltungen sind besonders vorteilhaft, da die eingesetzten Geschwindigkeiten während des Umformens einen erheblichen Einfluss auf die Präzision und Qualität des Umformens Vorgangs haben.

Es ist bevorzugt, dass wenigstens eine Positionierbewegung mit diskontinuierlicher Geschwindigkeit ausgeführt wird. Möglich ist auch, dass wenigstens eine Positionierbewegung mit kontinuierlicher Geschwindigkeit ausgeführt wird. Insbesondere umfasst die diskontinuierliche Geschwindigkeit gezielte Veränderungen der Geschwindigkeit, welche insbesondere relevant für den Umformprozess sind. Sehr kurzzeitige Änderungen der Geschwindigkeit im Rahmen eines Anfahrens oder Abbremsens beim Beginn oder Endpunkt einer Positionierbewegung entsprechen vorzugsweise keiner gezielten Veränderung der Geschwindigkeit im Sinne der vorliegenden Erfindung. Beispielsweise kann ein Schaftabschnitt mit einer konstanten Geschwindigkeit bearbeitet werden, während ein anderer Schaftabschnitt mit einer über einen gegebenen Zeitraum konstanten anderen Geschwindigkeit oder mit einer über einen gegebenen Zeitraum gezielt ansteigenden und/oder abnehmenden Geschwindigkeit umgeformt wird.

Wenigstens eine der Positionierbewegungen ist vorzugsweise eine kontinuierliche Bewegung. Eine solche kontinuierliche Positionierbewegung ist insbesondere durch ein Fehlen von Stillständen bzw. Pausen gekennzeichnet. Die kontinuierliche Bewegung kann mit gleichbleibender oder mit veränderlicher Geschwindigkeit erfolgen. Insbesondere wird eine solche kontinuierliche Bewegung dann angesteuert, wenn ein Schaftabschnitt einen konstanten Querschnitt aufweist. Eine kontinuierliche Positionierbewegung ermöglicht eine besonders zügige Umformung von Speichenabschnitten.

Wenigstens eine Positionierbewegung kann eine schrittweise Bewegung sein. Eine solche schrittweise Bewegung ist insbesondere durch wenigstens einen Stillstand und/oder wenigstens eine Pause gekennzeichnet. Möglich ist auch, dass die schrittweise Bewegung in einem sogenannten Pilgerschrittverfahren erfolgt. Dabei können Änderungen der Bewegungsrichtung vorgesehen sein. Beispielsweise erfolgt nach einer Bewegung in die eine Richtung eine teilweise Bewegung in die entgegengesetzte Richtung. Dadurch können Schaftabschnitte mehrmals bzw. redundant bearbeitet werden. Vorzugsweise werden schrittweise Bewegungen für Schaftabschnitte mit einem veränderlichen Querschnitt eingesetzt. Auch stetige, sanfte oder kontinuierliche Geschwindigkeitsübergänge sind möglich.

In allen Ausgestaltungen ist es bevorzugt, dass das Formwerkzeug um eine Längsachse des Drahtwerkstoffes gedreht wird. Beispielsweise ist das Formwerkzeug in einem rotierenden Werkzeugkopf aufgenommen, welcher um die Längsachse des Drahtwerkstoffes während des Umformvorgangs rotiert. Eine solche Ausgestaltung hat den Vorteil, dass Formwerkzeuge eingesetzt werden können, welche nur auf einen Teil des Umfangs des Drahtwerkstoffes einwirken und dennoch eine gleichmäßige Umformung über den gesamten Umfang des Drahtwerkstoffes erreicht wird. Insbesondere wird das Formwerkzeug während eines wiederholten Schlagens auf den Drahtwerkstoff um dessen Längsachse gedreht. Besonders bevorzugt ist die Drehzahl und/oder die Winkelgeschwindigkeit des Formwerkzeuges an die Positionierbewegung und insbesondere an eine Geschwindigkeit der Positionierbewegung angepasst. Eine solche Synchronisation ermöglicht eine gleichmäßige Umformung mit präzise ausgestalteten Übergängen zwischen unterschiedlichen Querschnitten. Die Drehzahl kann während der Bearbeitung einer Speiche verändert werden.

Vorzugsweise wird wenigstens eine Positionierbewegung für einen vorgegebenen Zeitraum ausgesetzt. Insbesondere entspricht der Zeitraum der ausgesetzten Positionierbewegung wenigstens der Dauer einer Drehung des Formwerkzeugs um die Längsachse des Drahtwerkstoffes. Beispielsweise wird der Vorschub des Drahtwerkstoffes angehalten, während das Formwerkzeug einmal oder mehrmals um den Drahtwerkstoff gedreht wird. Möglich ist auch, dass der Zeitraum der ausgesetzten Positionierbewegung wenigstens einem Achtel oder einem Viertel oder einer halben Drehung des Formwerkzeugs entspricht. Die Dauer kann auch einer Dreivierteldrehung des Formwerkzeugs entsprechen. Möglich ist auch, dass die Positionierbewegung über einen längeren Zeitraum ausgesetzt wird, beispielsweise über zwei oder drei oder vier oder eine Vielzahl von Drehungen des Formwerkzeugs. Mit solchen Maßnahmen wird ein reproduzierbarer Übergang an den Übergangsbereichen und/oder Speichenenden ermöglicht. Die Übergangsbereiche können dann exakt an die Form des Formwerkzeugs angepasst werden.

Möglich ist auch, dass der Zeitraum der ausgesetzten Positionierbewegung wenigstens der Dauer der Einstellung wenigstens eines charakteristischen Maßes für die Umformung entspricht. Beispielsweise kann eine Reduziertiefe und/oder ein Prägemaß durch eine Verstellung des Formwerkzeugs erfolgen. Dabei wird der Vorschub vorzugsweise während der Einstellung angehalten. Die Einstellung kann aber auch bei fortlaufender Positionierbewegung erfolgen.

Besonders bevorzugt erfolgt zur Formgebung von Schaftabschnitten mit übereinstimmenden Querschnitten eine übereinstimmende Positionierbewegung. Insbesondere weisen die übereinstimmenden Querschnitte ein gleich bleibendes Quermaß auf, beispielsweise einen maximalen und/oder minimalen Durchmesser. Möglich ist auch, dass die übereinstimmenden Querschnitte eine identische Querschnittsform aufweisen.

Vorzugsweise erfolgt zur Formgebung von zylindrischen Schaftabschnitten die Positionierbewegung mit übereinstimmender effektiver Geschwindigkeit. Dabei ist möglich, dass die zylindrischen Schaftabschnitte, welche mit übereinstimmender effektiver Geschwindigkeit umgeformt werden, sich in ihrem Durchmesser unterscheiden. Möglich ist auch, dass die Positionierbewegung dabei mit übereinstimmender maximaler und/oder minimaler Geschwindigkeit erfolgt. Möglich ist auch, dass solche Einstellungen zur Formgebung von ovalen Schaftabschnitten oder komplex geformten Querschnitten bzw. Ausläufen vorgesehen sind.

In einer besonders bevorzugten Weiterbildung erfolgt zur Formgebung eines Schaftabschnittes mit veränderlichem Querschnitt die Positionierbewegung mit einer geringeren effektiven Geschwindigkeit als zur Formgebung eines Schaftabschnittes mit gleich bleibendem Querschnitt. Eine solche Ausgestaltung hat den Vorteil, dass eine hohe Bearbeitungsgeschwindigkeit in einfacheren Schaftabschnitten erfolgen kann, während in komplexer ausgestalteten Schaftabschnitten eine hohe Maßhaltigkeit erzielt werden kann. So ergibt sich insgesamt eine Herstellung mit engen Toleranzen, welche zugleich mit einer wirtschaftlichen Durchsatzleistung erfolgen kann. Der Schaftabschnitt mit veränderlichem Querschnitt kann beispielsweise einen konischen oder kegelförmigen Verlauf aufweisen.

Vorzugsweise erfolgt zur Formgebung eines Schaftabschnitts mit veränderlichem Durchmesser die Positionierbewegung mit geringerer effektiver Geschwindigkeit als in den direkt benachbarten Schaftabschnitten, wenn der Schaftabschnitt mit veränderlichem Durchmesser als ein Auslauf zwischen zwei zylindrischen Schaftabschnitten mit jeweils unterschiedlichen Durchmessern ausgebildet ist. Bei solchen Ausläufen wirkt sich die Absenkung der Geschwindigkeit der Positionierbewegung besonders wirksam auf die Maßhaltigkeit aus.

Besonders bevorzugt wird der als Auslauf dienende Schaftabschnitt kegelförmig ausgeformt. Möglich ist auch, dass der als Auslauf dienende Schaftabschnitt konisch ausgeformt wird. Der Auslauf kann auch einen kurvenförmigen Verlauf aufweisen, wobei die Kurve durch wenigstens eine Funktion charakterisiert wird. Der Auslauf kann auch durch wenigstens eine Formänderung des Querschnitts charakterisiert sein. Solche Ausläufe treten beispielsweise bei einem Übergang von einem als Flachspeiche ausgeformten Schaftabschnitt zu einem zylindrischen Schaftabschnitt auf.

Besonders bevorzugt wird die effektive Geschwindigkeit und/oder die maximale Geschwindigkeit der Positionierbewegung vor Beginn des Auslaufs reduziert. Insbesondere wird die effektive Geschwindigkeit und/oder die maximale Geschwindigkeit nach Ende des Auslaufs erhöht. Die effektive Geschwindigkeit und/oder die maximale Geschwindigkeit der Positionierbewegung bleibt während des Auslaufs insbesondere gleich. Es ist möglich, dass die Geschwindigkeit der Positionierbewegung bereits vor Erreichen des Auslaufs reduziert wird. Möglich ist auch, dass die Geschwindigkeit der Positionierbewegung erst Bereich des Auslaufs abgesenkt wird. Die Geschwindigkeit der Positionierbewegung wird vorzugsweise erst nach Ausformung des Auslaufs wieder angehoben. Möglich ist auch, dass die Geschwindigkeit der Positionierbewegung bereits während der Ausformung des Auslaufs wieder angehoben wird.

Es ist möglich, dass die Positionierbewegung während der Formgebung eines Auslaufs schrittweise erfolgt. Beispielsweise können dabei Stillstände der Positionierbewegung vorgesehen sein. Beispielsweise wird der Stillstand der Positionierbewegung zur Anpassung eines charakteristischen Maßes der Umformung eingesetzt. Beispielsweise wird während des Stillstands die Reduziertiefe eingestellt. Dazu kann das Formwerkzeug wenigstens teilweise verfahren werden.

Es ist besonders bevorzugt, dass die Positionierbewegung in Abhängigkeit einer Drehzahl des Formwerkzeugs um die Längsachse des Drahtwerkstoffes erfolgt. Möglich ist auch, dass die Positionierbewegung in Abhängigkeit einer Schlagzahl des Formwerkzeugs auf den Drahtwerkstoff erfolgt. Besonders bevorzugt wird die effektive Geschwindigkeit und/oder die maximale Geschwindigkeit und/oder die minimale Geschwindigkeit der Positionierbewegung in Abhängigkeit der Drehzahl und/oder der Schlagzahl des Formwerkzeugs eingestellt. Insbesondere erfolgt die Einstellung der Positionierbewegung und insbesondere die Einstellung der effektiven und/oder maximalen Geschwindigkeit der Positionierbewegung in Synchronisation mit der Drehzahl bzw. der Schlagzahl des Formwerkzeugs. Durch eine solche Synchronisation kann gewährleistet werden, dass Änderungen bezüglich der Positionierbewegung in optimaler Abstimmung mit einer möglichen bzw. vorliegenden Geschwindigkeit des Umformvorgangs erfolgen.

Es ist möglich, dass die effektive Geschwindigkeit und/oder die maximale Geschwindigkeit der Positionierbewegung in Abhängigkeit des Durchmessers des Querschnitts des Schaftabschnitts eingestellt wird. Es ist möglich, dass die effektive Geschwindigkeit und/oder die maximale Geschwindigkeit der Positionierbewegung umso höher gewählt wird, desto weniger der Drahtwerkstoff reduziert werden soll. Beispielsweise ist es möglich, dass durch die Auswahl der effektiven und/oder maximalen Geschwindigkeit der Positionierbewegung die Reduziertiefe eingestellt wird. Soll der Drahtwerkstoff beispielsweise weniger reduziert werden, wird eine höhere Geschwindigkeit für die Positionierbewegung gewählt.

Weiterhin ist es in allen Ausgestaltungen bevorzugt, dass zur Ausbildung der Querschnitte der Drahtwerkstoff wenigstens abschnittsweise mit dem Formwerkzeug schlagend umgeformt wird. Besonders bevorzugt wird der Drahtwerkstoff mit dem Formwerkzeug schlagend reduziert. Möglich ist auch, dass das Formwerkzeug prägend auf den Drahtwerkstoff einwirkt. Solche Ausgestaltungen haben den Vorteil, dass die Zähigkeit der Speichen erheblich verbessert wird. Derartige Umformverfahren bieten somit erhebliche Vorteile gegenüber beispielsweise einer Umformung durch Ziehverfahren.

Vorzugsweise wird zur Einstellung des Durchmessers eines Querschnitts eine Reduziertiefe des Formwerkzeugs durch wenigstens eine Verstelleinrichtung eingestellt. Möglich ist auch, dass durch die Verstelleinrichtung wenigstens ein anderes Reduziermaß eingestellt wird. Die Dauer der Einstellung des Formwerkzeugs wird insbesondere bei der Wahl der Geschwindigkeit der Positionierbewegung berücksichtigt. Möglich ist auch, dass die Positionierbewegung pausiert, während das Formwerkzeug durch die Verstelleinrichtung eingestellt wird. Insbesondere wird die Geschwindigkeit der Positionierbewegung während der Einstellung durch die Verstelleinrichtung abgesenkt.

Bevorzugt besteht das Formwerkzeug aus wenigstens zwei gegenüberliegenden Werkzeugeinheiten. Dabei werden die Werkzeugeinheiten insbesondere synchronisiert eingesetzt. Vorzugsweise werden die Werkzeugeinheiten zeitgleich betrieben. Besonders bevorzugt wirken die Werkzeugeinheiten synchronisiert schlagend auf den Drahtwerkstoff ein. Bevorzugt ist auch, dass die Werkzeugeinheiten während des Schlagens um die Längsachse des Drahtwerkstoffes gedreht werden. Insbesondere sind die Werkzeugeinheiten gegenüberliegend angeordnet. Möglich ist auch, dass eine der beiden Werkzeugeinheiten schlagend auf den Drahtwerkstoff einwirkt, während die andere Werkzeugeinheit als Widerlager dient.

Besonderes bevorzugt umfasst das Formwerkzeug vier Werkzeugeinheiten, die sich paarweise gegenüberliegen. Dabei werden die Paare der Werkzeugeinheiten abwechselnd nacheinander synchronisiert eingesetzt. Vorzugsweise werden die zwei Werkzeugeinheiten eines Paares zeitgleich betrieben. Weiterhin ist es in allen Ausgestaltungen besonders bevorzugt, dass die Positionierbewegung durch einen Vorschub des Drahtwerkstoffes erfolgt. Beispielsweise umfasst die Positionierbewegung ein Ziehen und/oder Schieben des Drahtwerkstoffes. Dazu ist die wenigstens eine Zuführeinrichtung vorgesehen. Beispielsweise ist die Zuführeinrichtung als eine Vorschubeinrichtung ausgebildet. Möglich ist auch, dass die Positionierbewegung durch ein Verfahren des Formwerkzeuges erfolgt. Möglich ist auch, dass sowohl der Drahtwerkstoff als auch das Formwerkzeug verfahren werden.

Das erfindungsgemäße Verfahren dient zur Herstellung von Speichen aus einem Drahtwerkstoff. Insbesondere sind die Speichen für wenigstens teilweise muskelkraftbetriebene Zweiräder vorgesehen. Dabei weisen die Speichen jeweils wenigstens einen Speichenschaft mit wenigstens zwei Schaftabschnitten auf. Die Schaftabschnitte unterscheiden sich in wenigstens einem Querschnitt. Eine zur Durchführung des Verfahrens geeignete Vorrichtung umfasst wenigstens eine Umformeinrichtung. Die Umformeinrichtung ist dazu geeignet und ausgebildet, zur Ausbildung der Querschnitte den Drahtwerkstoff wenigstens abschnittsweise mit wenigstens einem Formwerkzeug umzuformen.

Die Umformeinrichtung ist dazu geeignet und ausgebildet, die Relativposition des Drahtwerkstoffes in Bezug zu dem Formwerkzeug während des Umformens in axialer Richtung mit wenigstens einer Zuführeinrichtung zu verändern. Dabei ist die Zuführeinrichtung dazu geeignet und ausgebildet, zur Formgebung der Querschnitte in den wenigstens zwei Schaftabschnitten die Relativposition des Drahtwerkstoffes in Bezug zu dem Formwerkzeug mit unterschiedlichen Positionierbewegungen zu verändern.

Die Vorrichtung hat den Vorteil, dass eine besonders maßhaltige und präzise Herstellung von Speichen möglich ist. Zudem ermöglicht die Vorrichtung einen besonders hohen Durchsatz bei der Herstellung. Die Vorrichtung ist insbesondere nach dem zuvor beschriebenen Verfahren betreibbar. Insbesondere umfasst die Vorrichtung wenigstens eine Steuereinrichtung. Die Steuereinrichtung ist insbesondere dazu geeignet und ausgebildet, die Positionierbewegung mit einer Drehbewegung des Formwerkzeugs um eine Längsachse des Drahtwerkstoffes zu synchronisieren. Die Steuereinrichtung ist vorzugsweise auch dazu geeignet und ausgebildet, die Positionierbewegung synchronisiert mit einer Verstelleinrichtung zur Einstellung eines Reduziermaßes zu betreiben. In allen Ausgestaltungen der Vorrichtung und des Verfahrens gemäß der Erfindung wird vorzugsweise eine Vorschubgeschwindigkeit bzw. eine Relativgeschwindigkeit der Relativbewegung zwischen dem Drahtwerkstoff und der Umformeinrichtung gesteuert und vorzugsweise während der Bearbeitung einer Speiche verändert. Die Relativgeschwindigkeit kann zeitweise auch sehr gering, gleich 0 oder sogar negativ sein, um z. B. eine besonders intensive Bearbeitung eines oder mehrere Abschnitte zu ermöglichen.

In allen Ausgestaltungen erfolgt vorzugsweise ein schrittweises Umformen und insbesondere Schmieden des aus einem Drahtwerkstoff bestehenden Speichendrahtes. Die Form der Speiche wird insbesondere durch eine Vielzahl von Schlägen erreicht. Nach der Umformung durch Hämmern weist die Speiche über der Speichenlänge regelmäßig eine runde Außenkontur auf. Danach kann wenigstens ein weiterer Umformvorgang durch z. B. einen Prägeschritt vorgesehen werden, der über wenigstens einen Längsabschnitt der Speiche die im Wesentlichen runde Speiche in eine gewünschte andere Querschnittsform bringt, z. B. eine Messerform. Dort ist die Speiche als Flachspeiche ausgebildet und/oder messerartig abgeflacht ausgebildet.

Es ist bevorzugt, dass die Umformeinrichtung als Reduzierkopf ausgebildet ist oder einen solchen umfasst. Der Reduzierkopf umfasst (wenigstens) einen Außenkopf und (wenigstens) einen Innenkopf, die relativ zueinander drehbar sind. Insbesondere ist der Innenkopf drehbar ausgebildet. Vorzugsweise liegt eine Drehzahl des Innenkopfes zwischen etwa 500 und 2000 Umdrehungen pro Minute (U/min). Besonders bevorzugt liegt eine Drehzahl des Innenkopfes zwischen etwa zwischen etwa 750 und 1500 U/Min. Eine bevorzugte Drehzahl liegt bei ca. 925 U/min. In einer konkreten Ausgestaltung kann die Drehzahl des Innenkopfes zwischen etwa 800 und 1400 U/min variiert werden. Besonders bevorzugt umfasst die Umformeinrichtung vier Werkzeugeinheiten und eine als Schlagrolleneinrichtung ausgebildete Betätigungseinrichtung mit einer Mehrzahl von im Wesentlichen in Umfangsrichtung ortsfesten oder feststehenden Schlagrolleneinheiten und von verfahrbaren (insbesondere um den Speichendraht rotierbaren) Schlagrolleneinheiten. Vorzugsweise korreliert die Anzahl der rotierbaren Schlagrolleneinheiten mit der Anzahl der Werkzeugeinheiten und/oder der Anzahl der feststehenden Schlagrolleneinheiten. Die Anzahl der rotierbaren Schlagrolleneinheiten ist besonders bevorzugt größer als die Anzahl der feststehenden Schlagrolleneinheiten. Vorzugsweise ist die Anzahl der rotierbaren Schlagrolleneinheiten eine gerade Zahl. Vorzugsweise ist die Anzahl der verfahrbaren Schlagrolleneinheiten kein ganzzahliges Vielfaches der Anzahl der feststehenden Schlagrolleneinheiten. Besonders bevorzugt unterscheidet sich die Anzahl der verfahrbaren Schlagrolleneinheiten um die Zahl 2 von einem ganzzahligen Vielfachen der Anzahl der feststehenden Schlagrolleneinheiten.

Vorzugsweise ist die Anzahl der feststehenden Schlagrolleneinheiten gleich 4 und die Anzahl der rotierbaren Schlagrolleneinheiten größer oder gleich 6. Besonders bevorzugt ist die Anzahl der rotierbaren Schlagrolleneinheiten gleich 14. Bei vier Werkzeugeinheiten, die jeweils paarweise im Eingriff mit dem Speichendraht sind, und 14 in Umfangsrichtung verfahrbaren Schlagrolleneinheiten und vier in Umfangsrichtung ortsfesten Schlagrolleneinheiten ergibt sich bei z. B. 900 U/min. eine Schlagzahl auf den Speichendraht von 210 Schlägen pro Sekunde, sodass eine effektive und hochqualitative Herstellung von Speichen ermöglicht wird.

Die (axiale) Vorschubgeschwindigkeit bzw. Relativgeschwindigkeit zwischen Speiche und Umformeinrichtung liegt insbesondere zwischen 0,005 und 0,04 m/s und besonders bevorzugt zwischen 0,0075 und 0,025 m/s.

Bei einer Speichenlänge von 300 mm ergeben sich je nach Ausgangsdurchmesser und reduziertem Durchmesser Bearbeitungszeiten zwischen 5 und 40 Sekunden.

Die Reduktion des Durchmessers dient nicht nur der Gewichtsreduktion, sondern insbesondere auch einer Verbesserung der mechanischen Eigenschaften gemäß dem Prinzip einer Dehnschraube, wo durch eine Refuktion Spannungsspitzen am Kopf und am Schraubenschaft durch das "elastische" Mittelteil abgebaut werden. Hier wirkt der im Durchmesser reduzierte Abschnitt als "elastisches" Mittelteil.

Weitere Vorteile und Merkmale der vorliegenden Erfindung ergeben sich aus der Beschreibung der Ausführungsbeispiele, welche mit Bezug auf die beiliegenden Figuren im Folgenden erläutert werden.

In den Figuren zeigen:
- Fig. 1: eine schematische Ansicht eines Fahrrads;
- Fig. 2: eine schematische Ansicht einer Speiche;
- Fig. 3: eine stark schematisierte Darstellung einer Vorrichtung zur Durchführung des erfindungsgemäßen Verfahrens;
- Fig. 4: einen stark skizzierten Verlauf verschiedener Positionierbewegungen; und
- Fig. 5: einen stark skizzierten Verlauf weiterer Positionierbewegungen.

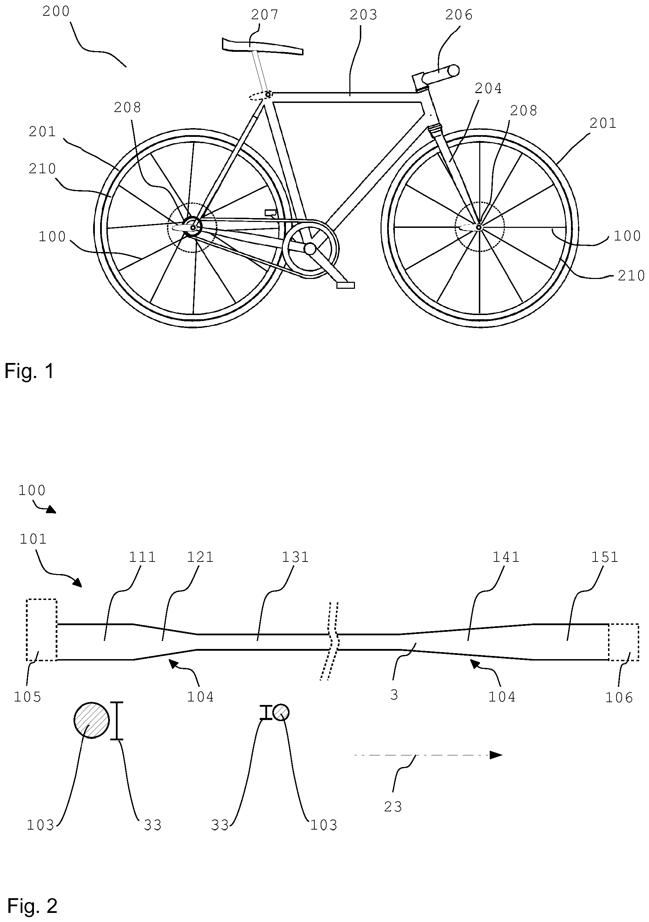

Die Figur 1 zeigt eine schematische Darstellung eines als Fahrrad ausgebildeten Zweirads 200. Das Fahrrad weist zwei Laufräder 201 auf, nämlich ein Vorderrad und ein Hinterrad. Weiterhin sind ein Rahmen 203, eine Gabel 204, ein Lenker 206 und ein Sattel 207 vorgesehen. Als Antrieb sind Pedale und hier eine Kettenschaltung vorgesehen. Das Vorderrad und das Hinterrad sind jeweils an Ausfallenden an der Gabel 204 bzw. dem Rahmen 203 befestigt. Das Vorderrad und das Hinterrad 101, 102 weisen jeweils eine Felge 210 und mit dem erfindungsgemäßen Verfahren hergestellte Speichen 100 auf, welche mit einer Nabe 208 verbunden sind. Die Speichen 1 sind aufgrund des Abbildungsmaßstabs nur schematisch dargestellt und werden mit Bezug auf Figur 2 näher dargestellt.

In der Figur 2 ist eine Speiche 100 in einer schematischen Längsansicht dargestellt, welche nach dem erfindungsgemäßen Verfahren hergestellt wurde. Die Abbildung ist nicht maßstabsgetreu, um das Prinzip besser zu verdeutlichen. Zwei beispielhafte Querschnitte 103 der Speiche sind schraffiert dargestellt. Die Querschnitte 103 weisen unterschiedliche Durchmesser 33 auf. Als Übergang zwischen den Bereichen unterschiedlichen Durchmessers 33 sind hier Ausläufe 104 vorgesehen. Die Ausläufe 104 weisen eine unterschiedliche Länge und eine unterschiedliche Steigung auf. Ein Pfeil skizziert die Längsachse 23 der Speiche.

Die Speiche 100 ist durch Umformung aus einem Drahtwerkstoff 3 gefertigt. Als Drahtwerkstoff wurde ein spezieller Speichendraht verwendet, welcher z.B. eine Zugfestigkeit von 1200 N/mm² und mehr aufweist. Der Speichendraht wurde schlagend auf die entsprechenden Querschnitte 103 bzw. Durchmesser 33 reduziert.

Die Speiche 100 verfügt hier an einem Ende über einen Speichenkopf 105 und hier an einem anderen Ende über ein Außengewinde 106, welches zur Verschraubung mit einem nicht gezeigten Speichennippel dient. Zwischen den beiden Enden erstreckt sich der Speichenschaft 101. Das erste Ende 105 wird an der Nabe 208 befestigt. Die Speiche 200 erstreckt sich von der Nabe 208 aus nach außen zu dem zweiten Ende 106, wo das Außengewinde dann mit einem Speichennippel an der Felge 210 befestigt wird.

Die Speiche 100 ist hier beispielhaft als eine Doppeldickend-Speiche ausgebildet. Möglich sind auch andere Speichenformen, wie z. B. Eindickend-Speichen oder auch Flachspeichen. Hier ist der Speichenschaft 101 in verschiedenen Schaftabschnitten 111, 121, 131, 141, 151 gezielt umgeformt. Die beiden an den Enden 105, 106 liegenden Schaftabschnitte 111, 151 sind hier zylindrisch ausgebildet und haben einen Querschnitt 103 mit einem Durchmesser von 2,0 mm. Der dazwischen liegende Schaftabschnitt 131 ist ebenfalls zylindrisch ausgebildet und weist einen Querschnitt 103 mit einem Durchmesser 33 von 1,5 mm auf. Durch eine solche Reduzierung des Speichenschaftes 101 kann das Gewicht deutlich reduziert werden, wobei gleichzeitig die notwendige Stabilität erhalten bleibt bzw. sogar gesteigert wird. Die Ausläufe 104 sind dabei so ausgeformt, dass einer ungünstigen Kerbwirkung entgegen gewirkt wird und ein besonders stabiler Übergang möglich ist. Der zum Kopf 105 liegende Schaftabschnitt 121 weist hier einen kürzeren Auslauf 104 als der zum anderen Ende 106 hin liegende Schaftabschnitt 141 auf. Diese Ausgestaltung berücksichtigt die im Laufrad 201 auftretenden Kräfte an der Speiche 100.

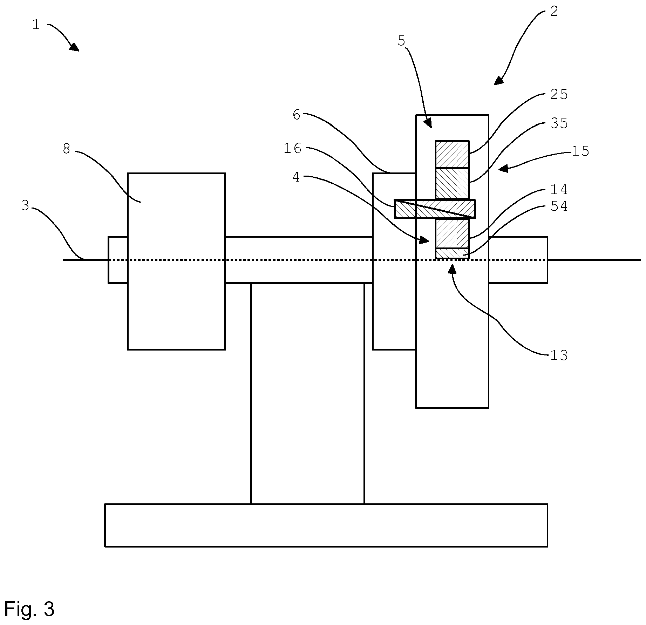

In der Figur 3 ist eine Vorrichtung 1 zur Herstellung von Speichen 100 beispielhaft gezeigt. Die Vorrichtung 1 kann nach dem erfindungsgemäßen Verfahren betrieben werden. Die Vorrichtung 1 umfasst eine Umformeinrichtung 2 zur Umformung eines Drahtwerkstoffes 3. Der Drahtwerkstoff 3 wird mittels einer hier als Vorschubeinrichtung ausgebildeten Zuführeinrichtung 8 durch die Umformeinrichtung 2 geführt.

Die Umformeinrichtung 2 umfasst ein Formwerkzeug 4 mit zwei oder vier sich paarweise gegenüberliegenden Werkzeugeinheiten 14, wobei hier zur besseren Übersicht nur eine Werkzeugeinheit 14 eingezeichnet ist. Zur Betätigung des Formwerkzeuges 4 ist eine Betätigungseinrichtung vorgesehen. Die Betätigungseinrichtung 5 ist hier als eine Schlagrolleneinrichtung 15 ausgebildet, welche eine Mehrzahl von feststehenden Schlagrolleneinheiten 25 sowie verfahrbaren Schlagrolleneinheiten 35 umfasst.

Zur Einstellung eines Reduziermaßes ist eine Verstelleinrichtung 6 vorgesehen. Die Verstelleinrichtung 6 weist eine Keileinrichtung 16 auf, welche zwischen der Schlagrolleneinheit 35 und der Werkzeugeinheit 14 angeordnet ist. Durch ein axiales Verschieben der Keileinrichtung 16 wird der Abstand zwischen der Schlagrolleneinheit 35 und der Werkzeugeinheit 14 eingestellt, sodass die Reduziertiefe entsprechend angepasst werden kann.

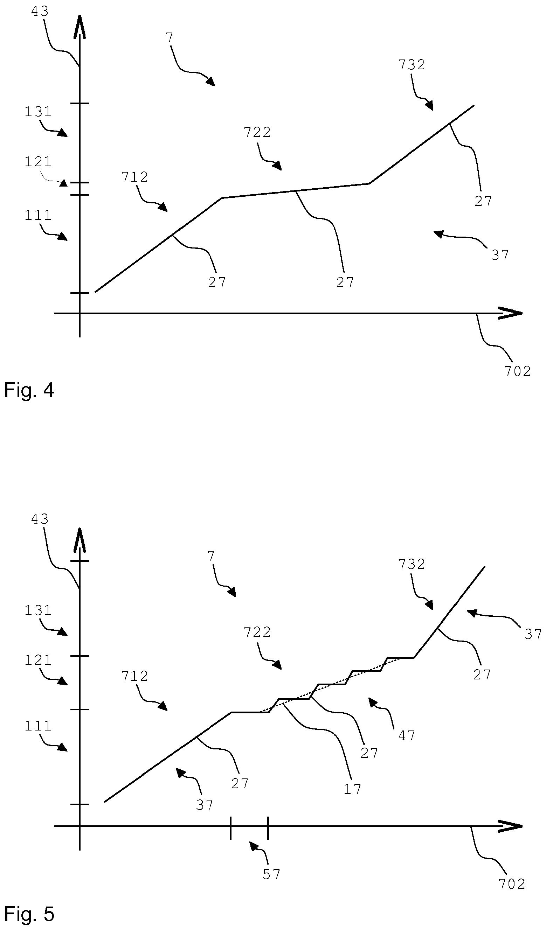

Die Figur 4 zeigt eine Skizze eines beispielhaften Ablaufs des erfindungsgemäßen Verfahrens. Dazu wurde hier die Relativposition 43 des Drahtwerkstoffes 3 in Bezug zu dem Formwerkzeug 4 gegen die Zeit 702 aufgetragen. Dadurch ergibt sich ein charakteristischer Verlauf der jeweiligen, unterschiedlichen Positionierbewegungen 7 während der Umformung des Drahtwerkstoffes 73. Die unterschiedlichen Positionierbewegungen 7 umfassen hier eine erste Positionierbewegung 712, gefolgt von einer zweiten Positionierbewegung 722 und einer dritten Positionierbewegung 732. Der skizzierte Verlauf gibt die maximalen Geschwindigkeiten 27 der Positionierbewegungen 7 wieder. Die einzelnen Positionierbewegungen 7 sind hier als kontinuierliche Bewegungen 37 ausgeführt.

Die jeweiligen Relativpositionen 43 entsprechen bestimmten Positionen des Formwerkzeugs 4 während der Bearbeitung entlang des Speichenschaftes 101. Der hier dargestellte Verlauf zeigt beispielhaft die Umformung eines Speichenschaftes 101 mit insgesamt drei unterschiedlichen Schaftabschnitten 111, 121, 131. Der Drahtwerkstoff 3 wird zunächst an eine Relativposition 43 gebracht, wo die Umformung des ersten Schaftabschnittes 111 beginnt. Dieser Schaftabschnitt ist beispielsweise zylindrisch ausgebildet und wird mit einer entsprechend zügigen Geschwindigkeit 27 bearbeitet. Gleiches gilt für den dritten Schaftabschnitt 131.

Der zweite Schaftabschnitt 121 wird hier beispielhaft als Auslauf 104 zwischen dem ersten Schaftabschnitt 111 und dem dritten Schaftabschnitt 131 ausgebildet. Da der Auslauf 104 hier beispielhaft eine konische oder kegelförmige Umformung erfährt, wird die Geschwindigkeit 27 für die Zeit 702 der Bearbeitung entsprechend abgesenkt. Dadurch kann der Auslauf 104 besonders präzise und mit sehr engen Toleranzen ausgeformt werden.

In der Figur 5 ist ein weiterer Verlauf von Positionierbewegungen 7 beispielhaft skizziert. Ähnlich wie in der Figur 4 beschrieben, wird auch hier eine Speiche 100 mit einem Speichenschaft 101 bestehend aus insgesamt drei Schaftabschnitten 111, 121, 131, umgeformt. Die erste Positionierbewegung 712 wird hier mit einer geringeren Geschwindigkeit 27 ausgeführt als die dritte Positionierbewegung 732.

Eine solche Ansteuerung des Drahtvorschubs ist beispielsweise dann sinnvoll, wenn eine Doppeldickend-Speiche gefertigt werden soll, bei der die Schaftabschnitte 111, 131 an den beiden Enden 105, 106 unterschiedliche Querschnitte bzw. unterschiedliche Durchmesser 33 aufweisen. Beispielsweise kann bei einem geringeren Durchmesser 33 des Speichenschaftes 101 mit einer geringeren Geschwindigkeit 27 gefahren werden, da der Drahtwerkstoff 3 an dieser Stelle eine stärkere Reduzierung erfährt. Möglich ist aber auch, dass auch bei unterschiedlich starken Reduzierungen des Speichenschaftes 101 mit gleicher bzw. ähnlicher Geschwindigkeit 27 positioniert wird.

Der hier gezeigte Verfahrensablauf umfasst zur Formgebung des zweiten Schaftabschnittes 121 eine Positionierbewegung 722, welche als eine schrittweise Bewegung 47 ausgebildet ist. Bei einer solchen schrittweisen Bewegung 47 wird die Positionierbewegung 7 zeitweise angehalten und zeitweise auf eine bestimmte Maximalgeschwindigkeit 27 gebracht. Die Pause der Positionierbewegung 7 dauert für einen bestimmten Zeitraum 57 an. Dieser Zeitraum 57 entspricht beispielsweise der Dauer einer Drehung oder eines Teils einer Drehung des Formwerkzeugs 4 um den Drahtwerkstoff 3. Möglich ist aber auch, dass der Zeitraum 57 auf die Dauer einer Verstellung des Formwerkzeugs 4 abgestimmt ist. Die maximale Geschwindigkeit 27 zwischen den Pausen kann entsprechend höher gewählt werden. Somit ergibt sich insgesamt eine effektive Geschwindigkeit 17, welche eine entsprechend zügige Umformung und somit einen wirtschaftlichen Durchsatz bei der Herstellung erlaubt. Die Veränderung der Geschwindigkeit kann auch kontinuierlich über einen Speichenabschnitt oder einen Teil eines Speichenabschnittes erfolgen.

Insbesondere ist es auch möglich, die Positionierbewegung 7 bzw. die Geschwindigkeit der Relativbewegung zwischen dem Speichenschaft und der Umformeinrichtung in z. B. den Speichenabschnitten 121 und 141 aus Fig. 2 anders zu wählen als in den Speichenabschnitten 111 oder 131. In Speichenabschnitten, in denen sich die Dicke ändert, kann insbesondere auch eine geringere Geschwindigkeit gewählt werden. Dann wird dafür gesorgt, dass sich dort die Speichenform in dem entsprechenden Speichenabschnitten 121 und 141 formgenau an die Form des Werkzeugs anpasst, wodurch enge Toleranzen erzielbar sind, da die Form des Speichenabschnittes der Werkzeugform entspricht.

In den Speichenabschnitten 111 und 151 mit maximalen Durchmessern kann gegebenenfalls gar keine Bearbeitung vorgenommen werden.

Das hier vorgestellte Verfahren ermöglicht die Herstellung von Speichen 100 mit einer besonders engen Toleranz, insbesondere im Bereich der Ausläufe 104. Beispielsweise kann eine Toleranz von weniger als +/- 0,5 mm im Bereich der Ausläufe 104 verwirklicht werden. Die Toleranz der bisher bekannten Verfahren beträgt z. B. bis zu 3 mm und mehr. Somit wird mit dem erfindungsgemäßen Verfahren ein erheblicher Gewinn an Maßhaltigkeit erzielt. Zudem bieten derartige, präzise Übergänge auch ein verbessertes optisches Erscheinungsbild sowie verbesserte aerodynamische Eigenschaften.

Die mit dem erfindungsgemäßen Verfahren erzielte erhöhte Maßhaltigkeit ist auch besonders bei Flachspeichen bzw. Messerspeichen von Vorteil. Flachspeichen mit einem weiten Toleranzbereich weisen häufig zylindrische Bereiche oder zu große Quermaße auf, sodass es beim Einspeichen zu Problemen mit der Einführung durch das Felgenloch kommen kann. Insgesamt bietet das erfindungsgemäße Verfahren erhebliche Vorteile bei der Herstellung von Speichen, welche insbesondere im High-End Laufradbau einsetzbar sind.

### Bezugszeichenliste:

| | | | |
|---|---|---|---|
| 1 | Vorrichtung | 101 | Speichenschaft |
| 2 | Umformeinrichtung | 103 | Querschnitt |
| 3 | Drahtwerkstoff | 104 | Auslauf |
| 4 | Formwerkzeug | 105 | Speichenkopf |
| 5 | Betätigungseinrichtung | 106 | Außengewinde |
| 6 | Verstelleinrichtung | 111 | Schaftabschnitt |
| 7 | Positionierbewegung | 121 | Schaftabschnitt |
| 8 | Zuführeinrichtung | 131 | Schaftabschnitt |
| 14 | Werkzeugeinheit | 141 | Schaftabschnitt |
| 15 | Schlagrolleneinrichtung | 151 | Schaftabschnitt |
| 16 | Keileinrichtung | 200 | Zweirad |
| 17 | Geschwindigkeit | 201 | Laufrad |
| 23 | Längsachse | 203 | Rahmen |
| 25 | Schlagrolleneinheit | 204 | Gabel |
| 27 | Geschwindigkeit | 206 | Lenker |
| 33 | Durchmesser | 207 | Sattel |
| 35 | Schlagrolleneinheit | 208 | Nabe |
| 37 | Bewegung | 210 | Felge |
| 43 | Relativposition | 702 | Zeit |
| 47 | Bewegung | 712 | Positionierbewegung |
| 54 | Kopfabschnitt | 722 | Positionierbewegung |
| 57 | Zeitraum | 732 | Positionierbewegung |
| 100 | Speiche | | |

## Patentansprüche

1. Verfahren zur Herstellung von Speichen (100) aus einem Drahtwerkstoff (3), insbesondere für wenigstens teilweise muskelkraftbetriebene Zweiräder (200), wobei die Speichen (100) jeweils wenigstens einen Speichenschaft (101) mit wenigstens zwei Schaftabschnitten (111, 121) aufweisen, wobei sich die Schaftabschnitte (111, 121) in wenigstens einem Querschnitt (103) unterscheiden und wobei zur Ausbildung der Querschnitte (103) der Drahtwerkstoff (3) wenigstens abschnittsweise mit wenigstens einem Formwerkzeug (4) umgeformt wird
und wobei die Relativposition (43) des Drahtwerkstoffes (3) in Bezug zu dem Formwerkzeug (4) während des Umformens in axialer Richtung mit wenigstens einer Zuführeinrichtung (8) verändert wird,
**dadurch gekennzeichnet,**
**dass** die Zuführeinrichtung (8) zur Formgebung der Querschnitte (103) in den wenigstens zwei Schaftabschnitten (111, 121) die Relativposition (43) des Drahtwerkstoffes (3) in Bezug zu dem Formwerkzeug (4) mit unterschiedlichen Positionierbewegungen (7) verändert,
und **dass** zur Ausbildung der Querschnitte (103) der Drahtwerkstoff (3) wenigstens abschnittsweise mit dem Formwerkzeug (4) schlagend oder durch Prägen umgeformt und/oder reduziert wird.

2. Verfahren nach Anspruch 1, wobei das Formwerkzeug (4) aus wenigstens zwei gegenüberliegenden Werkzeugeinheiten (14) besteht und wobei die Werkzeugeinheiten (14) synchronisiert auf den Drahtwerkstoff (3) einwirken.

3. Verfahren nach einem der vorhergehenden Ansprüche, wobei sich die Positionierbewegungen (7) in ihrer effektiven Geschwindigkeit (17) und/oder in ihrer maximalen und/oder minimalen Geschwindigkeit (27) unterscheiden.

4. Verfahren nach einem der vorhergehenden Ansprüche, wobei wenigstens eine Positionierbewegung (7) mit diskontinuierlicher Geschwindigkeit (27) ausgeführt wird und/oder wenigstens eine Positionierbewegung (7) mit kontinuierlicher Geschwindigkeit (27) ausgeführt wird.

5. Verfahren nach einem der vorhergehenden Ansprüche, wobei wenigstens eine Positionierbewegung (7) eine kontinuierliche Bewegung (37) ist und/oder wobei wenigstens eine Positionierbewegung (7) eine schrittweise Bewegung (47) ist.

6. Verfahren nach einem der vorhergehenden Ansprüche, wobei das Formwerkzeug (4) um eine Längsachse (23) des Drahtwerkstoffes (3) gedreht wird und wobei wenigstens eine Positionierbewegung (7) für einen vorgegebenen Zeitraum (57) ausgesetzt wird und der Zeitraum (57) der ausgesetzten Positionierbewegung (7) wenigstens der Dauer einer Drehung des Formwerkzeugs (4) um die Längsachse (23) des Drahtwerkstoffes (3) entspricht.

7. Verfahren nach einem der vorhergehenden Ansprüche, wobei zur Formgebung von Schaftabschnitten (111, 121) mit übereinstimmenden Querschnitten (103) eine übereinstimmende Positionierbewegung (7) erfolgt und/oder wobei zur Formgebung von zylindrischen Schaftabschnitten (111, 121) die Positionierbewegung (7) mit übereinstimmender effektiver Geschwindigkeit (17) erfolgt.

8. Verfahren nach einem der vorhergehenden Ansprüche, wobei zur Formgebung eines Schaftabschnittes (111, 121) mit veränderlichem Querschnitt (103) die Positionierbewegung (7) mit geringerer effektiver Geschwindigkeit (17) als zur Formgebung eines Schaftabschnittes (111, 121) mit gleichbleibendem Querschnitt (103) erfolgt.

9. Verfahren nach einem der vorhergehenden Ansprüche, wobei zur Formgebung eines Schaftabschnitts (111, 121) mit veränderlichem Durchmesser (33), welcher als Auslauf (104) zwischen zwei zylindrischen Schaftabschnitten (111, 121) mit jeweils unterschiedlichen Durchmessern (33) dient, die Positionierbewegung (7) mit geringerer effektiver Geschwindigkeit (17) als in den direkt benachbarten Schaftabschnitten (111, 121) erfolgt und wobei insbesondere der als Auslauf (104) dienende Schaftabschnitt (111, 121) kegelförmig und/oder konisch ausgeformt wird.

10. Verfahren nach dem vorhergehenden Anspruch, wobei die effektive Geschwindigkeit (17) und/oder die maximale Geschwindigkeit (27) der Positionierbewegung (7) vor Beginn des Auslaufs (104) heruntergefahren wird und nach Ende des Auslaufs (104) erhöht wird.

11. Verfahren nach einem der beiden vorhergehenden Ansprüche, wobei die Positionierbewegung (7) während des Auslaufs (104) schrittweise erfolgt und/oder wobei die Positionierbewegung (7) durch einen Vorschub des Drahtwerkstoffes (3) erfolgt.

12. Verfahren nach einem der vorhergehenden Ansprüche, wobei die Positionierbewegung (7) und insbesondere die effektive Geschwindigkeit (17) der Positionierbewegung (7) in Abhängigkeit einer Drehzahl des Formwerkzeuges (4) um die Längsachse (23) des Drahtwerkstoffes (3) und/oder einer Schlagzahl des Formwerkzeuges (4) erfolgt.

13. Verfahren nach einem der vorhergehenden Ansprüche, wobei die effektive Geschwindigkeit (17) der Positionierbewegung (7) in Abhängigkeit des Durchmessers (33) des Querschnitts (103) des Schaftabschnittes (111, 121) eingestellt wird.

14. Verfahren nach einem der vorhergehenden Ansprüche, wobei zur Einstellung des Durchmessers (33) eines Querschnitts (103) eine Reduziertiefe (16) des Formwerkzeugs (4) durch eine Verstelleinrichtung (6) eingestellt wird.

## Claims

1. Method of manufacturing spokes (100) from a wire material (3), in particular for at least partially muscle-powered two-wheeled vehicles (200), the spokes (100) each comprising at least one spoke shaft (101) having at least two shaft sections (111, 121), wherein the shaft sections (111, 121) differ in at least one cross-section (103), and wherein for forming the cross-sections (103), the wire material (3) is reshaped at least in sections by means of at least one shaping tool (4),
and wherein the relative position (43) of the wire material (3) relative to the shaping tool (4) is varied in the axial direction during shaping, by means of at least one feeding device (8),
**characterized in**
**that** the feeding device (8) varies the relative position (43) of the wire material (3) relative to the shaping tool (4) by different positioning movements (7) for shaping the cross-sections (103) of the at least two shaft sections (111, 121), and that for forming the cross-sections (103), the wire material (3) is reshaped and/or reduced at least in sections by way of hammering or embossing by means of the shaping tool (4).

2. The method according to claim 1, wherein the shaping tool (4) consists of at least two opposite tool units (14), and wherein the tool units (14) act on the wire material (3) in synchrony.

3. The method according to any of the preceding claims, wherein the positioning movements (7) differ in their effective speeds (27) and/or in their maximum and/or minimum speeds (27).

4. The method according to any of the preceding claims, wherein at least one positioning movement (7) is performed at discontinuous speeds (27) and/or at least one positioning movement (7) is performed at a continuous speed (27).

5. The method according to any of the preceding claims, wherein at least one positioning movement (7) is a continuous movement (47), and/or wherein at least one positioning movement (7) is an incremental movement (47).

6. The method according to any of the preceding claims, wherein the shaping tool (4) is rotated about the longitudinal axis (23) of the wire material (3) and wherein at least one positioning movement (7) is interrupted for a specified time interval (57) and the time interval (57) of the interrupted positioning movement (7) corresponds at least to the duration of one rotation of the shaping tool (4) about the longitudinal axis (23) of the wire material (3).

7. The method according to any of the preceding claims, wherein the shaping of shaft sections (111, 121) having identical cross-sections (103) is performed by identical positioning movements (17), and/or wherein the shaping of cylindrical shaft sections (111, 121) is performed by positioning movements (7) having identical effective speeds (17).

8. The method according to any of the preceding claims, wherein for shaping a shaft section (111, 121) having variable cross-sections (103), positioning movements (7) are performed at effective speeds (17) that are lower than for shaping a shaft section (111, 121) having a consistent cross-section (103).

9. The method according to any of the preceding claims, wherein for shaping a shaft section (111, 121) having variable diameters (33) and serving as a taper (104) between two cylindrical shaft sections (111, 121) each having a different diameter (33), positioning movements (7) are performed at effective speeds (17) that are lower than in the immediately adjacent shaft sections (111, 121), and wherein in particular the shaft section (111, 121) serving as a taper (104) is configured cone-shaped and/or conical.

10. The method according to the preceding claim, wherein the effective speed (17) and/or the maximum speed (27) of the positioning movement (7) is reduced prior to reaching the taper (104) and is increased after the end of the taper (104).

11. The method according to any of the two preceding claims, wherein the positioning movement (7) is performed in increments over the taper (104) and/or wherein the positioning movement (7) is performed by advancing the wire material (3).

12. The method according to any of the preceding claims, wherein the positioning movement (7) and in particular the effective speed (17) of the positioning movement (7) takes place in dependence on the rotational speed of the shaping tool (4) about the longitudinal axis (23) of the wire material (3) and/or the hammering count of the shaping tool (4).

13. The method according to any of the preceding claims, wherein the effective speed (17) of the positioning movement (7) is adjusted in dependence on the diameter (33) of the cross-section (103) of the shaft section (111, 121).

14. The method according to any of the preceding claims, wherein the diameter (33) of the cross-section (103) is set by adjusting the reduction depth (16) of the shaping tool (4) by means of an adjustment device (6).

## Revendications

1. Procédé de fabrication de rayons (100) à partir d'un matériau de fil de fer (3), notamment pour deux roues (200) entraînés au moins partiellement par force musculaire, lesdits rayons (100) présentant chacun au moins une tige de rayon (101) dotée d'au moins deux portions de tige (111, 121), lesdites portions de tige (111, 121) différant l'une de l'autre en au moins une section droite (103) et le matériau de fil de fer (3) étant, pour former les sections droites (103), au moins partiellement transformé à l'aide d'au moins un outil de formage (4)
et la position relative (43) du matériau de fil de fer (3) par rapport audit outil de formage (4) étant modifiée dans la direction axiale au cours de l'opération de transformation à l'aide d'au moins un dispositif d'alimentation (8),
**caractérisé en ce**
**que** ledit dispositif d'alimentation (8) modifie, pour former les sections droites (103), la position relative (43) du matériau de fil de fer (3) par rapport audit outil de formage (4) dans lesdites au moins deux portions de tige (111, 121) au moyen de mouvements de placement (7) différents,
et **que** pour former les sections droites (103), le matériau de fil de fer (3) est transformé et/ou réduit au moins partiellement à l'aide dudit outil de formage (4) par battage ou par embossage.

2. Procédé selon la revendication 1, ledit outil de formage (4) se composant d'au moins deux unités d'outil (14) en vis-à-vis l'une de l'autre et lesdites unités d'outil (14) agissant de manière synchronisée sur le matériau de fil de fer (3).

3. Procédé selon l'une quelconque des revendications précédentes, les mouvements de placement (7) différant les uns des autres dans leur vitesse (17) effective et/ou dans leur vitesse (27) maximale et/ou minimale.

4. Procédé selon l'une quelconque des revendications précédentes, au moins un mouvement de placement (7) étant réalisé à vitesse (27) discontinue et/ou au moins un mouvement de placement (7) étant réalisé à vitesse (27) continue.

5. Procédé selon l'une quelconque des revendications précédentes, au moins un mouvement de placement (7) étant un mouvement (37) continu et/ou au moins un mouvement de placement (7) étant un mouvement (47) progressif.

6. Procédé selon l'une quelconque des revendications précédentes, l'outil de formage (4) étant mis en rotation autour d'un axe longitudinal (23) dudit matériau de fil de fer (3) et au moins un mouvement de placement (7) étant au moins interrompu pour un laps de temps (57) prédéfini, et ledit laps de temps (57) de l'interruption du mouvement de placement (7) correspondant au moins à la durée d'une rotation dudit outil de formage (4) autour de l'axe longitudinal (23) du matériau de fil de fer (3).

7. Procédé selon l'une quelconque des revendications précédentes, un mouvement de placement (7) concordant étant effectué pour former des portions de tige (111, 121) de sections droites (103) concordantes et/ou le mouvement de placement (7) étant effectué à vitesse (17) effective concordante pour former des portions de tige (111, 121) cylindriques.

8. Procédé selon l'une quelconque des revendications précédentes, le mouvement de placement (7) pour former une portion de tige (111, 121) de section droite (103) variable étant effectué à une vitesse (17) effective inférieure à celle utilisée pour former une portion de tige (111, 121) de section droite (103) constante.

9. Procédé selon l'une quelconque des revendications précédentes, le mouvement de placement (7) étant effectué à vitesse (17) effective inférieure à celle utilisée dans les portions de tige (111, 121) directement voisines pour former une portion de tige (111, 121) de diamètre (33) variable qui sert de débouché (104) entre deux portions de tige (111, 121) cylindriques de diamètres (33) respectivement différents, et notamment la portion de tige (111, 121) servant de débouché (104) étant formée en forme de quille et/ou de cône.

10. Procédé selon la revendication précédente, la vitesse (17) effective et/ou la vitesse (27) maximale du mouvement de placement (7) étant diminuée avant le début du débouché (104) et augmentée après la fin du débouché (104).

11. Procédé selon l'une quelconque des deux revendications précédentes, le mouvement de placement (7) s'effectuant progressivement au cours du débouché (104) et/ou le mouvement de placement (7) s'effectuant par un avancement du matériau de fil de fer (3).

12. Procédé selon l'une quelconque des revendications précédentes, le mouvement de placement (7) et notamment la vitesse (17) effective dudit mouvement de placement (7) s'effectuant en fonction d'une vitesse de rotation de l'outil de formage (4) autour de l'axe longitudinal (23) du matériau de fil de fer (3) et/ou en fonction d'une vitesse de battage dudit outil de formage (4).

13. Procédé selon l'une quelconque des revendications précédentes, la vitesse (17) effective du mouvement de placement (7) étant ajustée en fonction du diamètre (33) de la section droite (103) de la portion de tige (111, 121).

14. Procédé selon l'une quelconque des revendications précédentes, une profondeur de réduction (16) de l'outil de formage (4) étant ajustée au moyen d'un dispositif de réglage (6) pour ajuster le diamètre (33) d'une section droite (103).
